# EUROPEAN PATENT SPECIFICATION

(11) **EP 1 875 809 B1**
(45) Date of publication and mention of the grant of the patent: **17.12.2008**
(21) Application number: 06014086.0
(22) Date of filing: 07.07.2006
(51) Int. Cl.: A23G 9/28, A23G 9/04, B67D 1/08

(54) **Frozen beverage dispenser**
Gefriergutgetränkespender
Distributeur de boissons sous forme de glace pilé

(43) Date of publication of application: 09.01.2008
(73) Proprietor: Huang, Mao-Hsin, Tucheng City T'ai pei (TW)
(72) Inventor: Huang, Mao-Hsin, Tucheng City T'ai pei (TW)
(74) Representative: Köhler, Walter

(56) References cited:
- US-A1- 2 358 756
- US-A1- 3 044 277
- US-A1- 3 407 618
- US-A1- 5 103 649
- US-E- R E26 966

## Description

### BACKGROUND OF THE INVENTION

### 1. Field of the Invention

The present invention relates to a beverage dispenser. More particularly, the present invention relates to a beverage dispenser including a stirring member for preventing the beverage from freezing or becoming thick in local areas.

### 2. Description of Related Art

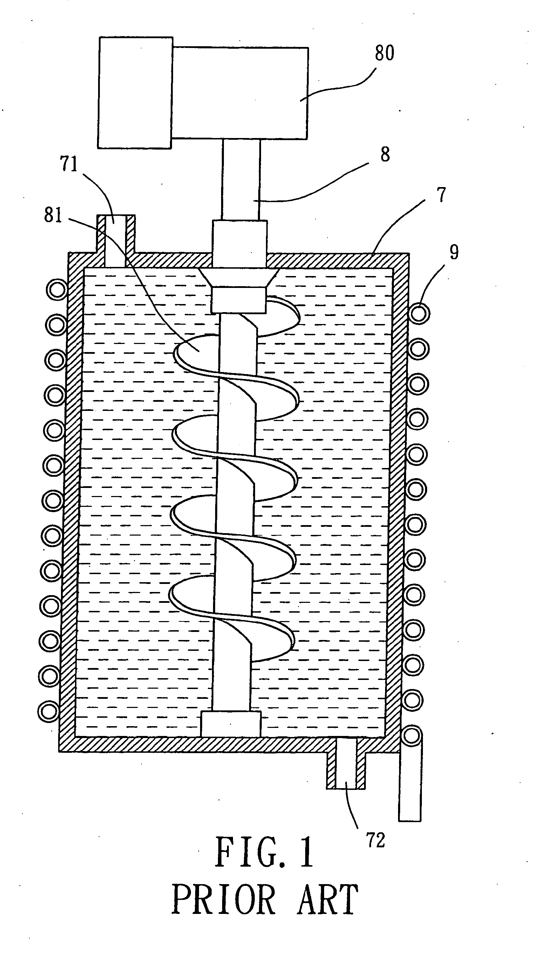

Fig. 1 illustrates a conventional beverage dispenser with a stirring device. The beverage dispenser comprises a container 7, a transmission shaft 8, and a cooler unit 9. The container 7 receives a beverage and includes an inlet 71 and an outlet 72. The transmission shaft 8 is rotatably extended through the container 7 and includes an end connected to and thus driven by a power unit 80 such as a motor. A stirring member 81 is provided on the shaft 8 and in the form of a continuous screw structure for stirring the beverage. The cooler unit 9 surrounds and in contact with an outer circumference of the container 7 for cooling the beverage in the container 7.

In use, the beverage is filled into the container 7 and the cooler unit 9 is activated to cool the container 7 and the beverage in the container 7. Then, the power unit 80 drives the transmission shaft 8 to turn, causing the beverage to circulate in the container 7, thereby mixing the beverage and preventing the beverage from freezing or becoming thick in local areas.

However, there is no partitioning device in the container 7 such that the beverage flows rapidly from the inlet 71 to the outlet 72. Hence, the beverage cannot reach the desired low temperature, as the time for heat exchange between the beverage and the container 7 is relatively short.

US 3 407 618 discloses a slush making machine according to the preamble of claim 1.

### OBJECTS OF THE INVENTION

An object of the present invention is to provide a beverage dispenser comprising at least one partitioning plate for dividing the container into at least two compartments that are in communication with each other by at least one passageway, prolonging the time of heat exchange for the beverage in the container and enhancing the heat exchange efficiency.

### SUMMARY OF THE INVENTION

A beverage dispenser in accordance with the present invention comprises a container, a transmission shaft, and at least one partitioning plate mounted to the transmission shaft to move therewith. The container includes a compartment for receiving a beverage. The container comprises an inlet through which beverage enters the container and an outlet through which the beverage exits the container. The transmission shaft is movable relative to the container. The at least one partitioning plate divides the compartment of the container into at least two subcompartments. At least one passageway is defined between the at least one partitioning plate and an inner circumference of the container to allow communication between the at least two subcompartments.

Due to provision of the at least one partitioning plate, the beverage in the container must flow through the at least two subcompartments before reaching the outlet. Thus, the time of heat exchange for the beverage is prolonged and the heat exchange efficiency is enhanced.

Preferably, the at least one passageway has an area not larger than one third of a sectional area of the container, and more preferably not larger than one fourth of the sectional area of the container.

In an example, the at least one partitioning member includes at least one notch in a portion of an outer circumference thereof.

In another example, the at least one partitioning plate includes a plurality of guiding holes.

Preferably, an overall area of the guiding holes and the at least one passageway is not larger than one third of the sectional area of the container.

Preferably, each guiding hole has an opening extends in a longitudinal direction or in a direction at an angle with the longitudinal direction.

Preferably, the inlet is defined in a higher portion of the container and the outlet is defined in a lower portion of the container.

Preferably, a cooler unit is provided for changing temperature of the beverage in the container.

Preferably, the cooler unit includes at least one of a tube in which a coolant is received and an electric cooling device.

The cooler unit is mounted outside the container or in a circumferential wall of the container.

In another example, the cooler unit is mounted to the inner circumference of the container and located in the at least one passageway.

Preferably, the transmission shaft includes a first end extending out of the container and connected to a power unit and a second end having an insertion section, allowing the transmission shaft to move in a longitudinal direction.

Preferably, the container includes a fixed axle mounted to a bottom thereof. The fixed axle is slidably received in the insertion section of the transmission shaft.

Preferably, the power unit is a pneumatic cylinder, a hydraulic cylinder, a motor or a gear train.

Preferably, the transmission shaft is capable of at least one of reciprocating and rotating relative to the container.

The power unit provides a longitudinal reciprocating force or a rotational force to drive the transmission shaft to reciprocate or rotate, which causes reciprocating movement or rotational movement of the at least one partitioning plate in the container. Hence, the beverage is forced to flow in each subcompartment, preventing the beverage from freezing or becoming thick in local areas. The taste is better and the utility is improved.

Other objects, advantages and novel features of this invention will become more apparent from the following detailed description when taken in conjunction with the accompanying drawings.

### BRIEF DESCRIPTION OF THE DRAWINGS

Fig. 1 is a sectional view of a conventional beverage dispenser;
Fig. 2 is a perspective view, partly cutaway, of a first embodiment of a beverage dispenser in accordance with the present invention;
Fig. 3 is a sectional view of the first embodiment of the beverage dispenser in accordance with the present invention;
Fig. 4 is a perspective view, partly cutaway, of a second embodiment of the beverage dispenser in accordance with the present invention;
Fig. 5 is a perspective view, partly cutaway, of a third embodiment of the beverage dispenser in accordance with the present invention; and
Fig. 6 is a sectional view of a fourth embodiment of the beverage dispenser in accordance with the present invention.

### DETAILED DESCRIPTION OF THE PREFERRED EMBODIMENTS

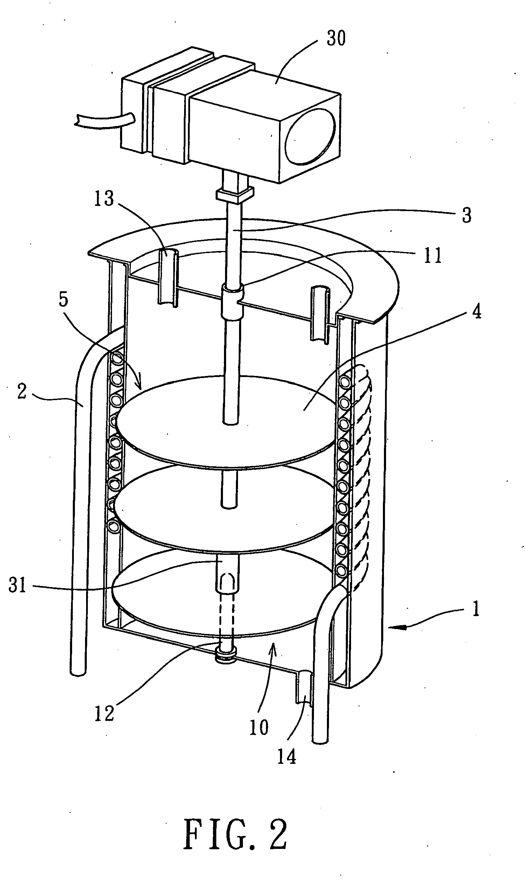

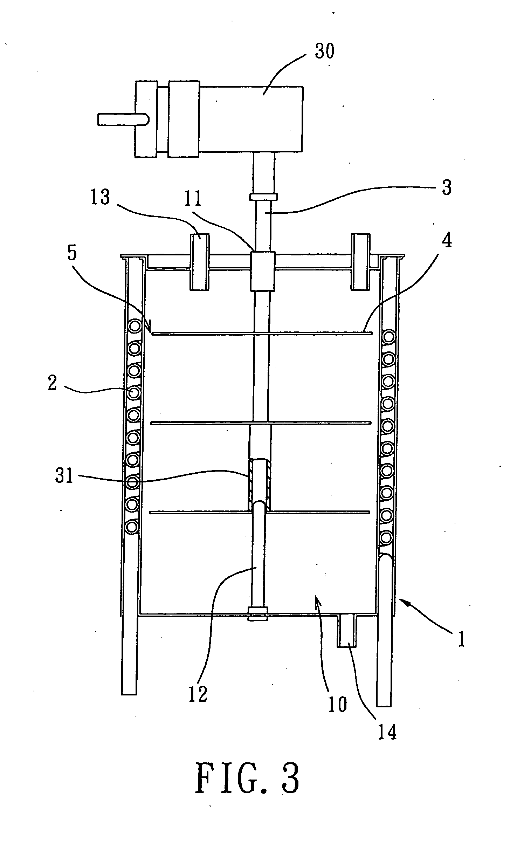

Referring to Figs. 2 and 3, a first embodiment of a beverage dispenser in accordance with the present invention is used for stirring beverage to produce cold beverage with fine frozen particles and thus can be used with machines for producing snow cones, granita, or ice wine.

Still referring to Figs. 2 and 3, the first embodiment of the beverage dispenser in accordance with the present invention comprises a container 1, a cooler unit 2, a transmission shaft 3, and at least one partitioning plate 4 (three in this embodiment). Each partitioning plate 4 is spaced from an inner circumference of the container 1 by at least one passageway 5.

The container 1 is preferably made of metal with excellent conductivity, such as stainless steel. The container 1 receives a beverage. The cooler unit 2 may include a tube in which coolant is received or an electric cooling device or both. The cooler unit 2 is mounted to an outer circumference of the container 1 or mounted inside a circumferential wall (not shown) of the container 1 for cooling the beverage in the container 1.

The transmission shaft 3 is rotatably extended through the container 1 for actuating the partitioning plates 4. Each partitioning plate 4 may be a single plate mounted to or integrally formed with the transmission shaft 3. The partitioning plates 4 divide a compartment 10 of the container 1 into a plurality of subcompartments (not labeled). In this example, a passageway 5 is defined between an outer circumference of each partitioning plate 4 and the inner circumference of the container 1. The passageways 5 allow communication between the subcompartments. To prolong the time of heat exchange for the beverage, the area of each passageway 5 is preferably not larger than one third of a sectional area of the container 1, and more preferably not larger than one fourth of the sectional area of the container 1.

Still referring to Figs. 2 and 3, more specifically, the first embodiment in accordance with the present invention comprises a compartment 10, an upper shaft-mounting hole 11, a fixed axle 12, an inlet 13, and an outlet 14. The partitioning plates 4 are mounted in the compartment 10 and the beverage is received in the compartment 10. The upper shaft-mounting hole 11 is defined in a center of a top wall of the container 1, and the transmission shaft 3 extends through the upper shaft-mounting hole 11. The fixed axle 12 is fixed to a bottom wall of the container 10 for positioning the transmission shaft 3. The inlet 13 is defined in an upper portion of the container 1, allowing the beverage to be filled into the container 10. The outlet 14 is defined in a lower portion of the container 1, allowing dispensing of the beverage after cooling.

Still referring to Figs. 2 and 3, an end of the transmission shaft 3 is connected to the power unit 30 that is preferably a pneumatic cylinder, a hydraulic cylinder, a motor, or a gear train. The other end of the transmission shaft 3 includes an insertion section 31 into which the fixed axle 12 is inserted. The transmission shaft 3 is slidable in the upper shaft-mounting hole 11 in a longitudinal direction whereas the insertion section 31 slidably receives the fixed axle 12, allowing the transmission shaft 3 to reciprocate in the longitudinal direction or rotate relative to the container 10.

Still referring to Fig. 3, in use, the beverage is filled via the inlet 13 into the container 1, and the cooler unit 2 cools the beverage (or maintains the temperature of the beverage) through heat conduction. Due to provision of the partitioning plates 4, the beverage in the container 4 must flow through the subcompartments before reaching the outlet 14. Thus, the time of heat exchange for the beverage is prolonged and the heat exchange efficiency is enhanced. Further, the power unit 30 provides a longitudinal reciprocating force or a rotational force to drive the transmission shaft 3 to reciprocate or rotate, which causes reciprocating movement or rotational movement of the partitioning plates 4 in the container. Hence, the beverage is forced to flow in each sub compartment, preventing the beverage from freezing or becoming thick in local areas. The taste is better and the utility is improved.

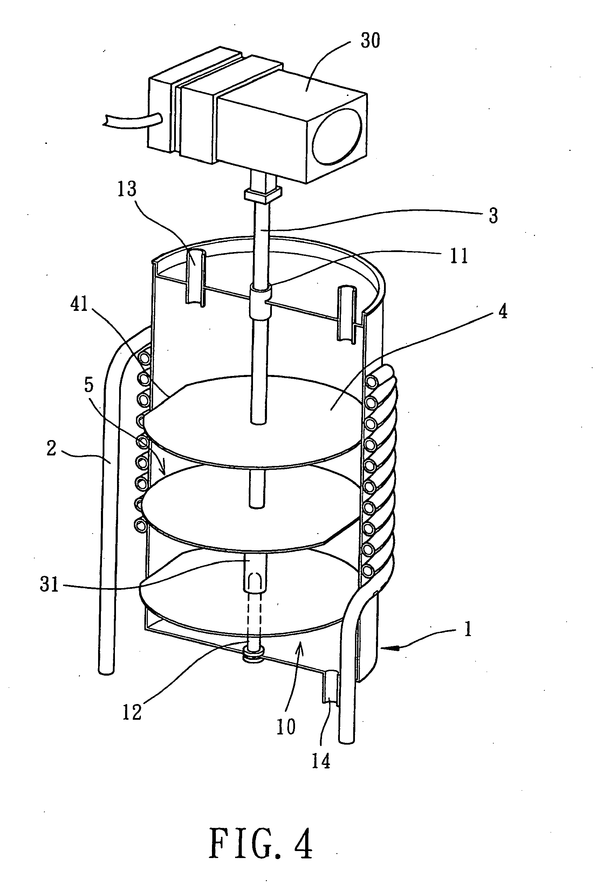

Fig. 4 illustrates a second embodiment of the beverage dispenser in accordance with the present invention. Compared to the first embodiment, each partitioning plate 4 in the second embodiment includes a notch 41 in a portion of the outer circumference thereof to increase the area of the passageway 5 between a pair of subcompartments adjacent to each other. The notches 41 of the partitioning plate 4 also provide various paths for the beverage. Similar to the first embodiment, the area of each passageway 5 is preferably not larger than one third of the sectional area of the container 1, and more preferably not larger than one fourth of the sectional area of the container 1. Preferably, the notches 41 of a pair of partitioning plates 4 adjacent to each other are not aligned with each other. This creates a winding path for the beverage. Further, the edges of the notches 41 destroy the frozen particles in the beverage in each subcompartment when the partitioning plates 4 reciprocate or rotate in the container 1, providing finer frozen particles in the beverage. The heat exchange efficiency and utility are enhanced.

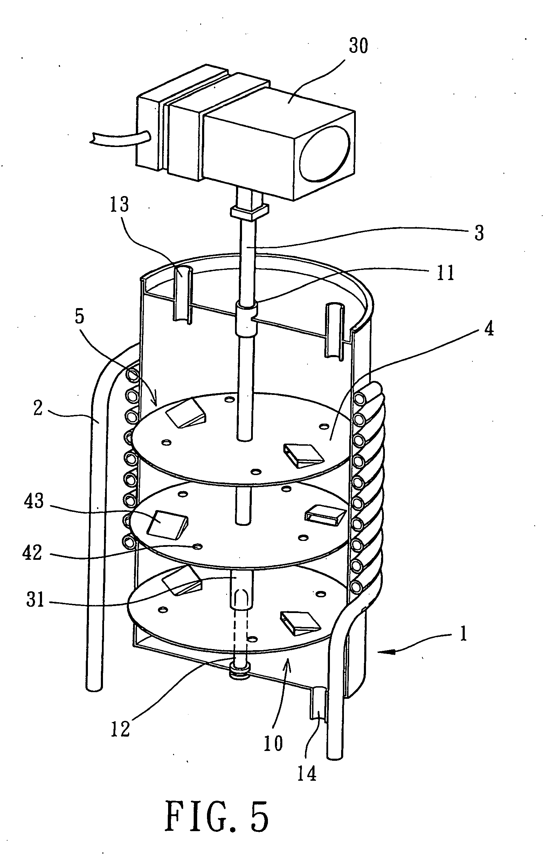

Fig. 5 illustrates a third embodiment of the beverage dispenser in accordance with the present invention. Compared to the first and second embodiments, each partitioning plate 4 in the third embodiment includes at least one guiding hole 42, 43 to allow communication between a pair of subcompartments adjacent to each other. The overall area of the guiding holes 42 and 43 and the passageway 5 of each partitioning plate 5 is preferably not larger than one third of the sectional area of the container 1, and more preferably not larger than one fourth of the sectional area of the container 1. Preferably, the guiding holes 42 and 43 of a pair of partitioning plates 4 adjacent to each other are not aligned with each other. This provides various paths for the beverage and thus prolongs the time of heat exchange for the beverage. Thus, the beverage may flow in various paths through and guided by the guiding holes 42 and 43 between a pair of subcompartments adjacent to each other. Preferably, each guiding hole 42, 43 has an opening extends in a longitudinal direction or in a direction at an angle with the longitudinal direction. Further, when the partitioning plates 4 is driven by the transmission shaft 3 to reciprocate or rotate in the container 1, the beverage is forced to flow in the subcompartments through the passageways 5 and the guiding holes 42 and 43, preventing the beverage from freezing or becoming thick in local areas while providing finer frozen particles in the beverage and better taste.

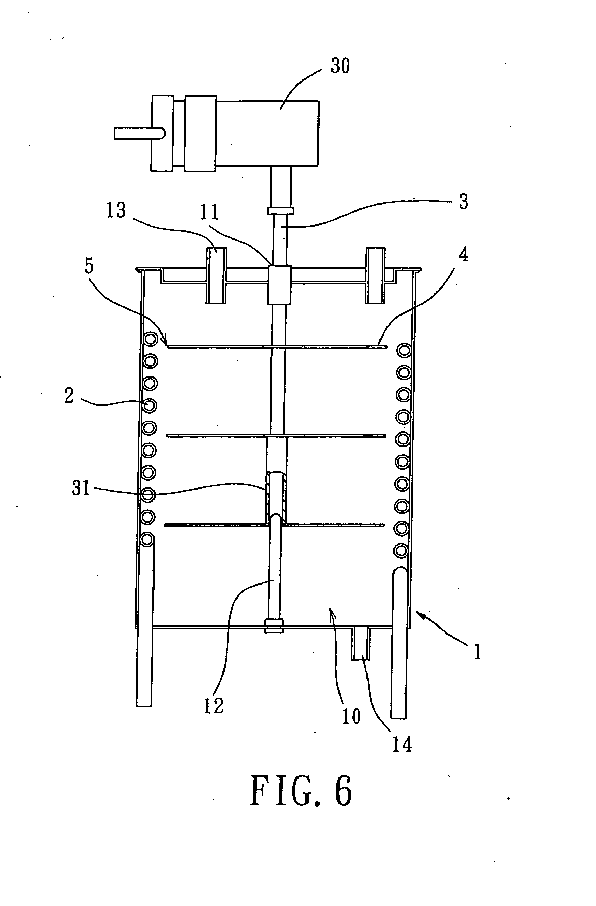

Fig. 6 illustrates a fourth embodiment of the beverage dispenser in accordance with the present invention. Compared to the first and third embodiments, the passageways 5 for the beverage are defined between the cooler unit 2 and the outer circumferences of the partitioning plates 4. More specifically, the cooler unit 2 is mounted to the inner circumference of the container 1 and located in the passageways 5 whereas a gap exists between each partitioning plate 4 and the cooler unit 2 to form a passageway for the beverage. The cooler unit 2 for cooling the beverage is not in contact with the environment and thus enhances the heat exchange efficiency. Still, the beverage is able to flow through the subcompartments via the passageways 5 between the cooler unit 2 and the partitioning plates 4 to prolong the time of heat exchange.

## Claims

1. A beverage dispenser comprising:
a container (1) including a compartment for receiving a beverage, the container comprising an inlet (13) through which beverage enters the container (1) and an outlet (14) through which the beverage exits the container;
a transmission shaft (3) extending through the container, the transmission shaft being movable relative to the container; **characterised in that** it comprises further:
at least one partitioning plate (4) mounted to the transmission shaft to move therewith, said at least one partitioning plate (4) dividing the compartment (10) of the container (1) into at least two subcompartments, at least one passageway (5) being defined between said at least one partitioning plate (4) and an inner circumference of the container (1) to allow communication between said at least two subcompartments.

2. The beverage dispenser as claimed in claim 1 wherein at least one passageway (5) has an area not larger than one third of a sectional area of the container.

3. The beverage dispenser as claimed in claim 2 wherein the area of at least one passageway (5) is not larger than one fourth of the sectional area of the container.

4. The beverage dispenser as claimed in claim 1 wherein said at least one partitioning plate (4) includes at least one notch (41) in a portion of an outer circumference thereof.

5. The beverage dispenser as claimed in claim 1 wherein said at least one partitioning plate includes a plurality of guiding holes (42).

6. The beverage dispenser as claimed in claim 5 wherein an overall area of said guiding holes (42) and said at least one passageway is not larger than one third of a sectional area of the container.

7. The beverage dispenser as claimed in claim 1 wherein the inlet (13) is defined in a higher portion of the container and wherein the outlet (14) is defined in a lower portion of the container.

8. The beverage dispenser as claimed in claim 1 further comprising a cooler unit (2) for changing temperature of the beverage in the container.

9. The beverage dispenser as claimed in claim 8 wherein the cooler unit (2) is mounted outside the container or in a circumferential wall of the container.

10. The beverage dispenser as claimed in claim 8 wherein the cooler unit (2) is mounted to the inner circumference of the container and located in said at least one passageway.

11. The beverage dispenser as claimed in claim 1 wherein the transmission shaft (3) including a first end extending out of the container and connected to a power unit (30), the transmission shaft further including a second end including an insertion section, allowing the transmission shaft (3) to move in a longitudinal direction.

12. The beverage dispenser as claimed in claim 11 wherein the container includes a fixed axle (12) mounted to a bottom thereof, the fixed axle being slidably received in the insertion section of the transmission shaft.

13. The beverage dispenser as claimed in claim 11 wherein the transmission shaft (3) is capable of at least one of reciprocating and rotating relative to the container.

## Patentansprüche

1. Getränkespender, der umfasst:
einen Behälter (1) mit einem Fach für die Aufnahme eines Getränks, wobei der Behälter einen Einlass (13), durch den das Getränk in den Behälter (1) eintritt, und einen Auslass (14), durch den das Getränk den Behälter verlässt, besitzt;
eine Kraftübertragungswelle (3), die sich durch den Behälter erstreckt, wobei die Kraftübertragungswelle in Bezug auf den Behälter beweglich ist; **dadurch gekennzeichnet, dass** er ferner umfasst:
wenigstens eine Trennplatte (4), die an der Kraftübertragungswelle angebracht ist, um sich mit ihr zu bewegen, wobei die wenigstens eine Trennplatte (4) das Fach (10) des Behälters (1) in wenigstens zwei Unterfächer unterteilt, wobei wenigstens ein Durchlass (5) zwischen der wenigstens einen Trennplatte (4) und einem inneren Umfang des Behälters (1) definiert ist, um die Kommunikation zwischen den wenigstens zwei Unterfächern zu ermöglichen.

2. Getränkespender nach Anspruch 1, wobei wenigstens ein Durchlass (5) eine Fläche besitzt, die nicht größer als ein Drittel der Querschnittsfläche des Behälters ist.

3. Getränkespender nach Anspruch 2, wobei die Fläche wenigstens eines Durchlasses (5) nicht größer als ein Viertel der Querschnittsfläche des Behälters ist.

4. Getränkespender nach Anspruch 1, wobei die wenigstens eine Trennplatte (4) wenigstens eine Kerbe (41) in einem Abschnitt ihres äußeren Umfangs aufweist.

5. Getränkespender nach Anspruch 1, wobei die wenigstens eine Trennplatte mehrere Führungslöcher (42) aufweist.

6. Getränkespender nach Anspruch 5, wobei eine Gesamtfläche der Führungslöcher (42) und des wenigstens einen Durchlasses nicht größer als ein Drittel einer Querschnittsfläche des Behälters ist.

7. Getränkespender nach Anspruch 1, wobei der Einlass (13) in einem oberen Abschnitt des Behälters definiert ist und wobei der Auslass (14) in einem unteren Abschnitt des Behälters definiert ist.

8. Getränkespender nach Anspruch 1, der ferner eine Kühlungseinheit (2) umfasst, um die Temperatur des Getränks im Behälter zu ändern.

9. Getränkespender nach Anspruch 8, wobei die Kühlungseinheit (2) außerhalb des Behälters oder in einer Umfangswand des Behälters angebracht ist.

10. Getränkespender nach Anspruch 8, wobei die Kühlungseinheit (2) am inneren Umfang des Behälters angebracht ist und sich in dem wenigstens einen Durchlass befindet.

11. Getränkespender nach Anspruch 1, wobei die Kraftübertragungswelle (3) ein erstes Ende, das sich aus dem Behälter erstreckt und mit einer Antriebseinheit (30) verbunden ist, aufweist, wobei die Kraftübertragungswelle ferner ein zweites Ende aufweist, das einen Einsteckabschnitt besitzt, der zulässt, dass sich die Kraftübertragungswelle (3) in einer Längsrichtung bewegt.

12. Getränkespender nach Anspruch 11, wobei der Behälter einen festen Bolzen (12) aufweist, der an seiner Bodenseite angebracht ist, wobei der feste Bolzen in dem Einsteckabschnitt der Kraftübertragungswelle gleitend aufgenommen ist.

13. Getränkespender nach Anspruch 11, wobei sich die Kraftübertragungswelle (3) in Bezug auf den Behälter entweder hin und her bewegen oder drehen kann.

## Revendications

1. Distributeur de boisson comprenant :
un récipient (1) comprenant un compartiment pour recevoir une boisson, le récipient comprenant un orifice d'entrée (13) à travers lequel la boisson entre dans le récipient (11) et un orifice de sortie (14) à travers lequel la boisson sort du récipient ;
un arbre de transmission (3) s'étendant à travers le récipient, l'arbre de transmission étant mobile par rapport au récipient ; **caractérisé en ce qu'**il comprend en outre :
au moins une plaque de séparation (4) montée sur l'arbre de transmission pour se déplacer avec celui-ci, au moins une de ladite plaque de séparation (4) divisant le compartiment (10) du récipient (1) en au moins deux sous-compartiments, au moins un passage (5) étant défini entre au moins une de ladite plaque de séparation (4) et une circonférence interne du récipient (1) pour permettre une communication entre au moins lesdits deux sous-compartiments.

2. Distributeur de boisson selon la revendication 1, dans lequel l'aire d'au moins un passage (5) n'est pas supérieure à un tiers d'une section du récipient.

3. Distributeur de boisson selon la revendication 2, dans lequel l'aire d'au moins un passage (5) n'est pas supérieure à un quart de la section du récipient.

4. Distributeur de boisson selon la revendication 1, dans lequel au moins une de ladite plaque de séparation (4) comprend au moins une entaille (41) dans une partie d'une circonférence externe de celle-ci.

5. Distributeur de boisson selon la revendication 1, dans lequel au moins une de ladite plaque de séparation comprend une pluralité de trous de guidage (42).

6. Distributeur de boisson selon la revendication 5, dans lequel une aire globale desdits trous de guidage (42) et d'au moins un dudit passage n'est pas supérieure à un tiers d'une section du récipient.

7. Distributeur de boisson selon la revendication 1, dans lequel l'orifice d'entrée (13) est défini dans une partie supérieure du récipient, et dans lequel l'orifice de sortie (14) est défini dans une partie inférieure du récipient.

8. Distributeur de boisson selon la revendication 1, comprenant en outre une unité de refroidissement (2) pour modifier la température de la boisson dans le récipient.

9. Distributeur de boisson selon la revendication 8, dans lequel l'unité de refroidissement (2) est montée à l'extérieur du récipient ou dans une paroi circonférentielle du récipient.

10. Distributeur de boisson selon la revendication 8, dans lequel l'unité de refroidissement (2) est montée sur la circonférence interne du récipient et située dans au moins un dudit passage.

11. Distributeur de boisson selon la revendication 1, dans lequel l'arbre de transmission (3) comprend une première extrémité s'étendant en dehors du récipient et reliée à une unité de puissance (30), l'arbre de transmission comprenant en outre une deuxième extrémité comprenant une section d'insertion, permettant à l'arbre de transmission (3) de se déplacer dans une direction longitudinale.

12. Distributeur de boisson selon la revendication 11, dans lequel le récipient comprend un moyeu fixe (12) monté sur une partie inférieure de celui-ci, le moyeu fixe étant reçu de manière coulissante dans la section d'insertion de l'arbre de transmission.

13. Distributeur de boisson selon la revendication 11, dans lequel l'arbre de transmission (3) est capable d'effectuer au moins l'un d'un déplacement en va-et-vient et d'une rotation par rapport au récipient.
